# EUROPEAN PATENT APPLICATION

(11) **EP 4 417 639 A1**
(43) Date of publication of application: **21.08.2024**
(21) Application number: 23461517.7
(22) Date of filing: 16.02.2023
(51) Int. Cl.: C08G 73/02, C08L 61/04, C08L 79/02, C09D 5/08, C09D 179/02

(54) **A METHOD FOR SYNTHESIZING AN ANTICORROSIVE ADDITIVE AND A PRODUCT COMPRISING THEREOF**

(71) Applicant: NANOPURE Sp. z o.o., 02-676 Warszawa (PL)
(72) Inventor: WAJSZCZUK, Robert, 51-124 Wroclaw (PL); KORYCKI, Maciej, 53-416 Wroclaw (PL)
(74) Representative: Kancelaria Eupatent.pl Sp. z.o.o

(57) **Abstract**

A method for synthesizing an anticorrosive additive being a modified polyaniline (PANI), and products comprising the anticorrosive additive.

## Description

### TECHNICAL FIELD

The present invention relates a method for synthesizing a polyaniline-based anticorrosive additive that can be introduced to various compositions to impose anticorrosive properties. Further, the present invention relates to semifinished products and ready-to-use products comprising the additive.

### BACKGROUND

There are known anticorrosive additives to coating compositions that are based on conducting polymers. One of the polymers with conducting properties is polyaniline (PANI), which can have several forms differing in degree of oxidation. Chemical forms of polyaniline which possess conducting properties, including anticorrosive, are emeraldine salts (partially oxidized form of polyaniline). Considering the chemical structure, conducting form of polyaniline has radical cationic charges on its conjugated polymer backbone which are stabilized by anionic counter-ions such that the charges can move along the conjugated polymer backbone. The conducting form of polyaniline is electrically conducting with conductivities in the range of 0.00001 S/cm-1000 S/cm.

There are known various PANI dopants enabling the development of intrinsic charge carriers, thereby, making PANI conductive. The dopants provide partial oxidation or partial reduction of PANI which is typically referred to as 'doping' - resulting in the formation of polymer (PANI) salts. In other words, doping allows electrons to flow due to the formation of conduction bands - which makes PANI conductive. In general, the 'doping' process can be regarded as an act of adding a small amount of impurity i.e. the dopant to a polymeric material to alter its properties. Doping of PANI may be done with various techniques, such as gaseous doping, solution doping, electrochemical doping, etc.. For instance, the polymer may be exposed to the dopant in a solution. Typically, protonic acid doping or oxidative doping is involved in conductive PANI synthesis. Protonic acid doping corresponds to the protonation of the imine nitrogen atoms without electron exchange. While in oxidative doping, emeraldine base goes through several stages with electron exchanges. HCl is typically used in protonic (acid) doping of PANI. This results in the protonation of the imine nitrogen atom in the chain backbone and gives emeraldine salt. Other common dopants are inorganic compounds: HClO₄, FeCl₃, AsF₅, I_{2.} NH₄BF₄, SO₃CF₃, HNOs, H₂SO4, or H₃PO₄; and organic compounds: para-toluene sulfonic acid (p-TSA), camphor sulfonic acid (CSA), or dodecyl benzene sulfonic acid (DBSA).

Because of high stability and low production cost, various conductive doped PANI forms are used as anticorrosive additives in different coating systems dedicated to substrates that are prone to corrosion, such as various metal alloys comprising iron. From the patent literature, there are known corrosion-inhibiting coating systems based on doped PANI forms.

A US patent US6756123 describes a substrate coated with anticorrosion paint system comprising: a primer coat paint layer comprising 3 to 49 wt% of polyaniline, 40 to 86 wt% of matrix resin, 1 to 47 wt% of additives and 10 to 56 wt% of mixed solvent; and a top coat paint layer for protecting the primer coat and improving anticorrosion effect, including 40 to 89 wt% of matrix resin, 5 to 54 wt% of colored pigment, 1 to 50 wt% of additives, and 5 to 54 wt% of mixed solvent. The polyaniline comprised in said paint system is emeraldine salt doped with hydrochloric acid (HCl) solution, or an oxidized form. Emeraldine salt can be de-doped by ammonium hydroxide (NH₄OH).

A US patent application US20130130056 describes a corrosion-protective composition comprising a wax, unsubstituted or substituted polyaniline in a doped form and a liquid paraffin. Said polyaniline is derived from polymerization or copolymerization of aniline, alkyl-substituted aniline, or sulfonated anilines, and doping the polyaniline with a dopant selected from aromatic sulfonic acids. The molar concentration of the dopant in the polyaniline is in the range from 20 to 200% relative to the moles of the aniline monomer units; wherein the polyaniline is present in the corrosion-protective composition in a range of 0.05 to 5% relative to the total mass of the composition.

A US patent US11208567 describes an emeraldine base composite consisting of an emeraldine base, and one or more of base materials. Said emeraldine base covers the entire surface of the base materials; the weight of the emeraldine base as a percent of said emeraldine base composite is in the range of from 0.1 to 50%. The method for production of the emeraldine base composite consists in contacting both monomer of emeraldine base and doped conducting polyaniline with the base material, polymerizing the monomer of the emeraldine base and said doped conducting polyaniline on the base material; and de-doping said emeraldine base to form a coating of insulated form of polyaniline and doped polyaniline on the base material to form composite particles.

One of inconveniences related to the polyaniline-based corrosion-inhibiting coating systems is limited solubility of the polyaniline which makes it difficult to process and disperse the compositions, particularly during the preparation of liquid coating systems (both water-based and solvent-based). Phosphorous anticorrosive additives exhibit better solubility and processability compared to anticorrosive polyaniline compounds, however, phosphorous compounds are recognized as harmful ingredients, contrary to conductive PANI forms.

### SUMMARY

It is therefore an object of the present invention to provide an alternative method for synthesizing PANI-based anticorrosive additive that can be used in various coating systems including water-based, organic solvent-based, and powder coating systems in which the synthesized PANI based anticorrosive additive can completely replace harmful phosphorous additives.

In one aspect, the invention relates to a method for synthesizing an anticorrosive additive, comprising the steps of providing an aqueous aniline salt solution that comprises at least one anilinium carboxylate synthesized from an aniline and at least one saturated polycarboxylic acid selected from at least one dicarboxylic acid and/or at least one tricarboxylic acid, providing an aqueous oxidant solution comprising from 2 to 5 wt% of an oxidizing agent comprising a manganese oxidant; contacting the aqueous aniline salt solution with the aqueous oxidant solution to form a reaction mixture wherein the at least one anilinium carboxylate is subject to an oxidative polymerization, wherein the molar ratio of the oxidizing agent to the aniline of the solutions being contacted is of 0.5 to 2.0; wherein the method comprises providing an anti-foaming agent in at least one of the aqueous aniline salt solution, the aqueous oxidant solution, or the reaction mixture, and wherein the total concentration of the anti-foaming agent in the reaction mixture is between 0.2 and 0.8 wt%;
and wherein the method further comprises the step of isolating an obtained product of the oxidative polymerization being the anticorrosive additive in a form of a modified polyaniline (PANI).

Said method involves oxidative doping of the anilinium carboxylate(s) resulting in the polymer being the modified PANI that shows improved anticorrosive properties including effective corrosion-inhibiting properties of the modified PANI.

Preferably, the manganese oxidant is KMnO₄.

Using this oxidant provides a very good yield of final product even after short time of synthesis (e.g. 4 hours).

Preferably, the oxidizing agent further comprises a non-manganese oxidant is (NH₄)₂S₂O₈, wherein the weight ratio of the manganese oxidant to the non-manganese oxidant is of 1:0.01 to 1 : 1.

The special selection of anilinium carboxylate(s), and the manganese (VII) salt(s) combined with non-manganese - as the oxidizing agent (potassium permanganate) is at least partially replaced by ammonium persulphate provide the effect of very good yield of the final product - even after short time of synthesis (e.g. 4 hours).

Preferably, the aqueous aniline salt solution comprises the at least one anilinium carboxylate being the salt of aniline and at least one saturated polycarboxylic acids selected from at least one dicarboxylic acid selected from the group consisting of oxalic acid, malonic, acid, succinic acid, phthalic acid, glutaric acid, adipic acid, and pimelic acid, and/or at least one tricarboxylic acid selected from the group consisting of citric acid, iso-citric acid, and tricarballylic acid.

These anilinium salts used as the substrates of the oxidative polymerization provide improvement in achievement of modern corrosion inhibitor based on polymeric composite being specific modified PANI that comprises the addition of manganese (II) compounds.

Preferably, the aqueous aniline salt solution has an acidic pH not exceeding pH of 2.5, wherein said acidic pH is assured by carboxylic moieties of the at least one polycarboxylic acids being in molar excess with respect to the aniline, in the aqueous aniline solution.

This facilitates the synthesis as well as the product isolation/purification route, as it assures that no other acidifying agents are required, keeping this way improved product purity - no additional byproducts selected from the acidifying agents are present in the obtained modified PANI.

Preferably, the method comprises preparing the aqueous aniline salt solution by preparing 0.6 to 2.2 M aqueous solution of the at least one polycarboxylic acid, and adding aniline to said solution in a molar deficiency with respect to the at least one polycarboxylic acids to assure an acidic pH of obtained the aqueous solution of at least one anilinium carboxylate not exceeding pH of 2.5.

The concentration of the polycarboxylic acids(s) of 0.6 to 2.2 M, at the stage of synthesis the anilinium carboxylate(s) -allows one to keep low pH up to 2.5, thorough the whole synthesis.

Preferably, the anti-foaming agent is an 15wt% emulsion of silicon compounds in water.

Using the anti-foaming agent of such composition provides significant reduction of foam formation during the process of synthesis.

Preferably, the oxidative polymerization is initiated by adding dropwise the aqueous oxidant solution to the aqueous aniline salt solution, wherein the oxidative polymerization is carried out under constant cooling in an ice bath, for 4 to 8 hours. This provides better control of the reaction conditions - adequate heat transfer enables a higher yield of the product.

In another aspect, the invention relates to an anticorrosive additive being a modified polyaniline (PANI) having Oil Absorption Number (OAN) between 60 and 90, the modified PANI comprising from 55 to 80 wt% of at least one polianiline salt being the salt of polyaniline and at least one saturated polycarboxylic acid selected from at least one dicarboxylic acid and/or at least one tricarboxylic acid, from 12 to 37 wt% of manganese (II) compounds, and from 1 to 8 wt% of moisture.

The modified PANI exhibits anticorrosive properties. It can be used as anticorrosive additive in various coating systems including water-based, organic solvent-based, and powder coating systems in which the synthesized PANI-based anticorrosive additive can completely replace harmful phosphorous additives.

In yet another aspect, the invention relates to a semifinished product being a composition for manufacturing a film-forming anticorrosive composition, the semifinished product comprising 10 to 20 wt% of the modified PANI according to the present invention.

The semifinished product constitutes a suitable donor comprising concentrated amount of the modified PANI forming an even and stable dispersion of the modified PANI. Using the semifinished product, the modified PANI can be easily introduced and mixed with the other ingredients of manufactured coating compositions.

Preferably, the semifinished product is in a form of a water dilutable concentrate, wherein the product further comprises 4 to 6 wt% of non-ionic dispersants, 3 to 5 wt% of polyethylene glycol (PEG), 4 to 5 wt% of additives selected from deaerators, thickeners, rheological agents, and biocides, optionally up to 50 wt% of titanium white (TiO₂), and/or optionally up to 20 wt% of a specific rust converter being a 10 wt% solution of rust converting substance, and water in amount to complete 100 wt% of the concentrate.

The concentrate is water dilutable, and it is especially suitable for preparing water-based coating systems, such as water paints, water-based primers, or water-based primer-enamel compositions. Using the concentrate simplifies manufacturing of the coating systems and provides good dispersing of the modified PANI powder in the whole coating system as well as improved dispersion stability in the ready-to-use products.

Optionally preferably, the semifinished product is in a form of an organic solvent dilutable paste, wherein the product further comprises 2.6 to 3.1 wt% of anionic dispersants, 20 to 30 wt% of aldehyde resin, 0.6 to 1.7 wt% of additives selected from deaerators, thickeners, and rheological agents, optionally up to 15wt% of titanium white (TiO₂), and/or optionally up to 20wt% of a specific rust converter being a 10 wt% solution of rust converting substance, and methoxypropyl acetate in amount to complete 100 wt% of the paste.

The paste is solvent-dilutable, and it is especially suitable for preparing organic solvent-based coating systems, such as solvent-based primers, or solvent-based primer-enamel compositions, solvent-based paints. Using the paste simplifies manufacturing of the coating systems and provides good dispersing of the modified PANI powder in the whole coating system as well as improved dispersion stability in the ready-to-use products.

In yet another aspect, the invention relates to a film-forming anticorrosive composition comprising from 0.1 to 0.6 wt% of the modified PANI according to the present invention.

This concentration of the modified PANI in the film film-forming anti-corrosive composition imposes improved anticorrosive properties to the composition, such that the modified PANI can completely replace other anticorrosive agents including harmful phosphorous additives.

Preferably, the film-forming anticorrosive composition comprises from 0.5 to 3 wt% of the above-mentioned concentrate.

Preferably, the film-forming anticorrosive composition comprises from 0.5 to 3 wt% of the above-mentioned paste.

Such compositions are stable dispersions of the modified PANI powder with reduced tendency to phase separation or sedimentation.

These and other features, aspects and advantages of the invention will become better understood with reference to the following drawings, descriptions and claims.

### BRIEF DESCRIPTION OF DRAWINGS

The present invention is shown by means of preferred embodiments in a drawing, wherein:
Fig. 1 presents schematically a method for synthesizing a polyaniline-based anticorrosive additive according to the present invention;
Fig. 2 presents a general principle for synthesizing modified PANI according to the present invention.

### DETAILED DESCRIPTION

Reference will now be made to embodiments, examples of which are illustrated in the accompanying drawings. Aspects and features of the embodiments will be described with reference to the accompanying drawings. The present invention, however, may be embodied in various different forms and should not be construed as being limited only to the illustrated embodiments. Rather, these embodiments are provided as examples so that this disclosure will be thorough and complete, and will fully convey the aspects and features of the present invention to those skilled in the art. It shall be understood that not all of the features shown in the embodiments are essential and the scope of the protection is defined not by means of literally shown embodiments, but by the features provided in the claims.

In one aspect, the invention relates to the method for synthesizing anticorrosive additive: doped polyaniline (PANI) with addition of manganese compounds, further referred to as 'modified PANI'. The modified PANI according to the present invention can be used for preparing various coating systems, including film-forming anticorrosive compositions, such as primers, enamels, direct-to-metal (DTM) compositions, paints etc., as well as semifinished compositions for forming film-forming anti-corrosive compositions, including pastes or concentrates respectively suitable for preparation of water-based and solvent-based liquid organic film-forming compositions; further, the modified PANI is suitable to be used for preparing powder (non-liquid) organic film-forming compositions; the semifinished products as well as ready-to-use products based on the modified PANI can comprise various matrix resins systems, including but not limited to epoxide, polyester.

The modified PANI obtained according to the present invention can effectively inhibit corrosion of various prone-to-corrosion substrates, such as steel surfaces; moreover, the modified PANI can replace various, solid or liquid (including toxic) corrosion inhibitors such as toxic anticorrosive agents based on zinc phosphates typically used as ingredients of organic coating systems.

The addition of the modified PANI to the coating systems implies electrostatic properties of the obtained coatings such that the coatings exhibit anticorrosive properties. None of additives such as carbon black, alkylphenols, or alkylphenol ethoxylates need to be added to the obtained coatings systems.

### Synthesis of the modified PANI

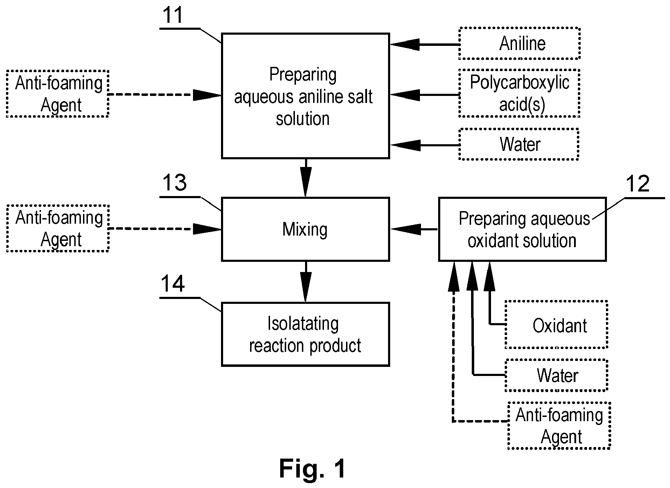

The method for synthesis of the anticorrosive additive according to the present invention is schematically shown in Fig. 1. The method comprises preparing an aqueous aniline salt solution in step 11. which involves mixing aniline with at least one saturated polycarboxylic acid, and more preferably at least one saturated dicarboxylic acid and/or at least one tricarboxylic acid. The non-limiting examples of the dicarboxylic acids that can be used according to the present invention include oxalic acid, malonic, acid, succinic acid, phthalic acid, glutaric acid, adipic acid, and pimelic acid. The non-limiting examples of the tricarboxylic acids that can be used according to the present invention include citric acid, iso-citric acid, and tricarballylic acid.

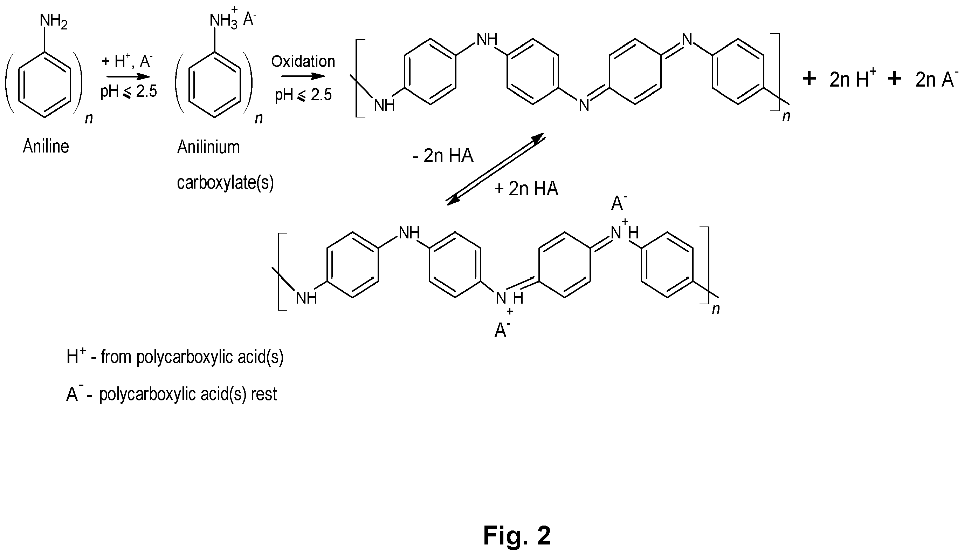

To prepare the aqueous aniline salt solution, aniline is introduced to 0.6 to 2.2 M polycarboxylic acid(s) water solution. This enables synthesis of respective anilinium carboxylate(s) - schematic reaction of synthesis anilinium carboxylate is shown in Fig.2. Preferably, the molar amount of polycarboxylic acid(s) is provided in stoichiometric excess with respect to the molar amount of aniline. More preferably, the molar excess of polycarboxylic acid(s) applied with respect to aniline, provides acidic pH of the aqueous aniline salt solution; preferably pH of the aqueous aniline salt solution is 2.5 or lower, and more preferably pH of the aqueous solution of anilinium carboxylate(s) is in the range from 2.5 to 1. The reaction for synthesis of the anilinium carboxylate(s) is preferably carried out from 4 to 8 hours, at the temperature of 5 to 15°C, under constant mixing.

Separately, in step 12 an aqueous oxidant solution comprising 2 to 5 wt% of an oxidizing agent is prepared. The aqueous oxidant solution is prepared by introducing to water, a respective amount of the oxidizing agent comprising a manganese oxidant. Preferably, the manganese oxidant is potassium permanganate (KMnO₄). Further, the oxidizing agent can comprise non-manganese oxidant preferably ammonium persulphate ((NH₄)₂S₂O₈).

Thereby, the mass ratio of manganese oxidant to non-manganese oxidant in the oxidizing agent is preferably from 1:0 to 1:1. In other words, potassium permanganate can be partially (preferably up to 50wt%) replaced by ammonium persulphate.

In step 13 the aqueous aniline salt solution is brought into contact with the aqueous oxidant solution, as shown in Fig 2. Preferably, the aqueous oxidant solution is added to the aqueous aniline salt solution in a batchwise manner, and more preferably in a dropwise manner so as to continuously feed the aqueous aniline salt solution with small portions of the oxidizing agent. This way the reaction, which is substantially exothermic, can be carried out in controlled manner. The total amount of the aqueous oxidant solution introduced into the aqueous aniline salt solution corresponds to the molar ratio of the oxidant agent to the aniline of 0.5 to 2.0. This enables synthesis of the modified PANI of improved anticorrosive parameters.

After introducing the total amount of the aqueous oxidant solution, mixing in step 13 is preferably continued for 4 to 8 hours, preferably under constant cooling of the reaction mixture, e.g. by using ice-water bath. Such conditions allow for complete precipitation of the synthesis product i.e. the modified PANI.

In step 13, the pH value of the reaction mixture is at substantially constant level not exceeding 2.5, through the mixing. Such low (acidic) pH is assured by carboxyl moieties of the polycarboxylic acid(s), used in excess with respect to aniline, as described above. This ensures that said low pH is observed throughout the whole reaction (modified PANI synthesis), and no acidifying additives need to be introduced during the synthesis to maintain the pH at the level not exceeding 2.5.

During the synthesis of the modified PANI, an anti-foaming agent is introduced into the reaction medium, at least in one of the steps 11 -13, i.e. at the preparation of aqueous aniline salt solution, at the preparation of the aqueous oxidant solution, and/or at contacting said solutions, as schematically shown in Fig. 1. by the dotted arrows. Preferably, the anti-foaming agent is introduced at least at the step 11. during the formation of anilinium carboxylate(s). More preferably, the anti-foaming agent is additionally or instead said introduction at step 11. added at the step 12 of preparation the aqueous aniline salt solution. This provides desired reduction of foaming of the reaction mixture. Preferably, the portions (mass doses) of the anti-foaming agent introduced at the step 11 and at 12. are equal. When the anti-foaming agent is further introduced at the step 13, the portions (mass doses) are preferably equal, at each step, so as to finally obtain concentration of the anti-foaming agent in the reaction mixture between 0.2 and 0.8 wt%.

Preferably, the anti-foaming agent according to the present invention is a 15wt% (% by weight) emulsion of silicon compounds, such as for example polydimethylsiloxane (PDMS), in water. Furthermore, for example, commercially available EXOANTIFOAM S100 from PCC Exol SA (Brzeg Dolny, Poland) can be used as the anti-foaming agent. Next, in step 14 the obtained product, i.e. the modified PANI, is isolated from the postreaction medium. The product is in the form of precipitate which can be isolated using known techniques. The isolation, in step 14, can involve filtrating and washing the precipitate with distilled water until the filtrate achieves pH from the range of 4,5 to 5,5. For instance, the precipitate can be washed with three portions of distilled water. Properly washed precipitate can be dried, preferably in temperature of 80 to 90°C, for 8 to 10 hours. Dried product, i.e., the modified PANI is in powdery form having black-green-brown color; the powder is ready to be used as an anticorrosive additive (which may serve at the same time as a dark pigment) for preparing various anticorrosive coating systems. The obtained dried product has oil absorption number (OAN) between 60 to 90. determined by ASTM D281-12/2016 (Standard Test Method for Oil Absorption of Pigments).

The modified PANI obtained according to the above described method comprises thereby from 55 to 80 wt% of at least one polyaniline salt being the salt of polyaniline and at least one saturated polycarboxylic acid selected from at least one dicarboxylic acid and/or at least one tricarboxylic acid (shown schematically in Fig 2), from 12 to 37 wt% of manganese (II) compounds (being byproduct of the oxidation), and from 1 to 8 wt% of moisture.

Thus, the modified PANI can serve as additive, such as pigment additive of anticorrosion properties, in various products for coating systems, including water-based coating systems, organic solvent-based coating systems, or powder coating systems, serving for protection of various corrosion-susceptible surfaces, such as steel surfaces.

The doped PANI obtained according to the present invention is non-toxic, and it can efficiently replace toxic solid or liquid anticorrosive additives such as harmful phosphorous-based additives including those based on zinc phosphate.

Table 1 presents seven examples (E1 - E7) of various compositions for modified PANI synthesis (regarding manganese oxidizing agent), together with an amount [wt%] of each component used, according to the method of the present invention.

**Table 1 - compounds [ wt% ] used for modified PANI synthesis, in seven examples (E1 - E7):**

| Name | E1 | E2 | E3 | E4 | E5 | E6 | E7 |
|---|---|---|---|---|---|---|---|
| | Substrate for modified PANI synthesis [wt%] | | | | | | |
| Aniline | 2.10 | 2.10 | 2.10 | 2.10 | 2.10 | 2.10 | 2.10 |
| Tricarboxylic acid | 4,32 | 3,89 | 3,89 | 4,32 | 4,32 | 4,76 | 6.05 |
| Dicarboxylic acid | 1.13 | 0.85 | 1.13 | 1.13 | 1.13 | 1.13 | 1.13 |
| Anti-foam ing agent (available as EXOANTIFOA M S100) | 0.50 | 0.50 | 0.50 | 0.50 | 0.50 | 0.50 | 0.50 |
| Oxidizing agent: KMnO₄ | 2.67 | 3,20 | 3,20 | 3,20 | 3,56 | 3,56 | 3,56 |
| Demineralized water (for | 89,28 | 89,46 | 89,18 | 88,75 | 88,39 | 87,95 | 86,66 |
| precipitate washing) | | | | | | | |
| Total | 100 | 100 | 100 | 100 | 100 | 100 | 100 |
| Oil absorption number (OAN) of the obtained product, the modified PANI | 63 | 77 | 76 | 70 | 64 | 67 | 79 |

Presented below, Table 2 presents the following seven examples (E1a - E7a) of various compositions for modified PANI synthesis (regarding a mixture of manganese and non-manganese oxidizing agent), together with an amount [wt%] of each component used, according to the method of the present invention.

**Table 2 - compounds [ wt% ] used for modified PANI synthesis, in seven examples (E1a - E7a):**

| Name | E1a | E2a | E3a | E4a | E5a | E6a | E7a |
|---|---|---|---|---|---|---|---|
| | Substrate for modified PANI synthesis [wt%] | | | | | | |
| Aniline | 2.10 | 2.10 | 2.10 | 2.10 | 2.10 | 2.10 | 2.10 |
| Tricarboxylic acid | 4,32 | 3,89 | 3,89 | 4,32 | 4,32 | 4,76 | 6.05 |
| Dicarboxylic acid | 1.13 | 0.85 | 1.13 | 1.13 | 1.13 | 1.13 | 1.13 |
| Anti-foam ing agent (available as EXOANTIFOA M S100) | 0.50 | 0.50 | 0.50 | 0.50 | 0.50 | 0.50 | 0.50 |
| Non-manganese oxidizing agent: | 1.67 | 2.00 | 2.00 | 2.00 | 2.22 | 2.22 | 2.22 |
| (NH₄)₂S₂O₈ | | | | | | | |
| Manganese oxidizing agent: KMnO₄ | 1.33 | 1.60 | 1.60 | 1.60 | 1.78 | 1.78 | 1.78 |
| Demineralized water (for precipitate washing) | 88, 95 | 89.06 | 88,78 | 88,35 | 87, 95 | 87,51 | 86,22 |
| Total | 100 | 100 | 100 | 100 | 100 | 100 | 100 |
| Oil absorption number (OAN) of the obtained product, the modified PANI | 63 | 77 | 76 | 70 | 64 | 67 | 79 |

The modified PANI, preferably in a dry powder form, can be introduced into various coating systems, preferably in amount of 0.1 to 1 wt% or more, and more preferably in amount of 0.1 to 0.6 wt%, to impose their anticorrosive properties, including matrix-resin powder coating systems, such as epoxide or polyester matrix-resin powder coating systems, further comprising additives including but not limited to fillers and/or auxiliary agents, and optionally another anticorrosive agent(s). Preferably, the modified PANI can be introduced to said powder coating systems in amount of 0.1 to 1 wt%.

In another aspect of the present invention, the obtained modified PANI can be used for preparing various semifinished products preferably in a form of concentrates or pastes which can constitute suitable donors of concentrated amount of the modified PANI for production of ready-to-use anticorrosive coating systems. According to the present invention, using the semifinished products comprising concentrated amounts of suitably dispersed powder of the modified PANI can considerably facilitate production stage of anticorrosive-PANI based coating systems, particularly when the composition of desired coating system is not compatible with the modified PANI, e.g. powder of the modified PANI is sparingly dispersible, or non-dispersible in the ingredients of desired coating system, due to the hydrophobic nature of the modified PANI of Oil Absorption Number (OAN) between 60 and 90. In more details, using the semifinished products - comprising evenly dispersed powder of the modified PANI, in manufacture of various anticorrosive ready-to-use coating systems, provides at least reduction, and more preferably elimination of difficulties, appearing at production stages, associated with handling powder of the modified PANI and further making even and stable dispersions of said powder and the other ingredients of the coating systems. Moreover, this can further reduce and more preferably eliminate phase destabilization or powder insufficient dispersion in the final products. Further, using said semifinished products does not require additional time-consuming and laborious operations such as grinding, whilst manufacturing the coating systems.

### Semifinished product comprising the modified PANI in a form of water-dilutable concentrate

The concentrate preferably comprises 10 to 20 wt% of the modified PANI according to the present invention; 4 to 6 wt% of non-ionic dispersants, e.g. ethoxylated alcohol C₁₈; 3 to 5 wt% of polyethylene glycol (PEG); 4 to 5 wt% of additive(s) including at least one additive selected from the group consisting of deaerators, thickeners, rheological agents, and biocides; optionally up to 50 wt% of titanium white (TiO₂); and/or optionally up to 20 wt% of a specific rust converter being a 10wt% solution of rust converting substance, preferably tannic acid dissolved in water; and water (as solvent) in amount to complete 100 wt% of the concentrate. Table 3 presents three various compositions (C1 - C3) of the water-based concentrate comprising the modified PANI, according to the present invention.

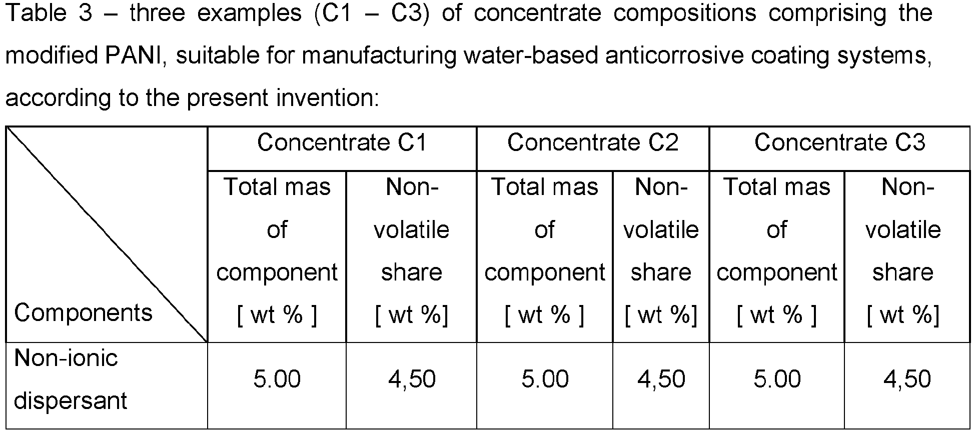

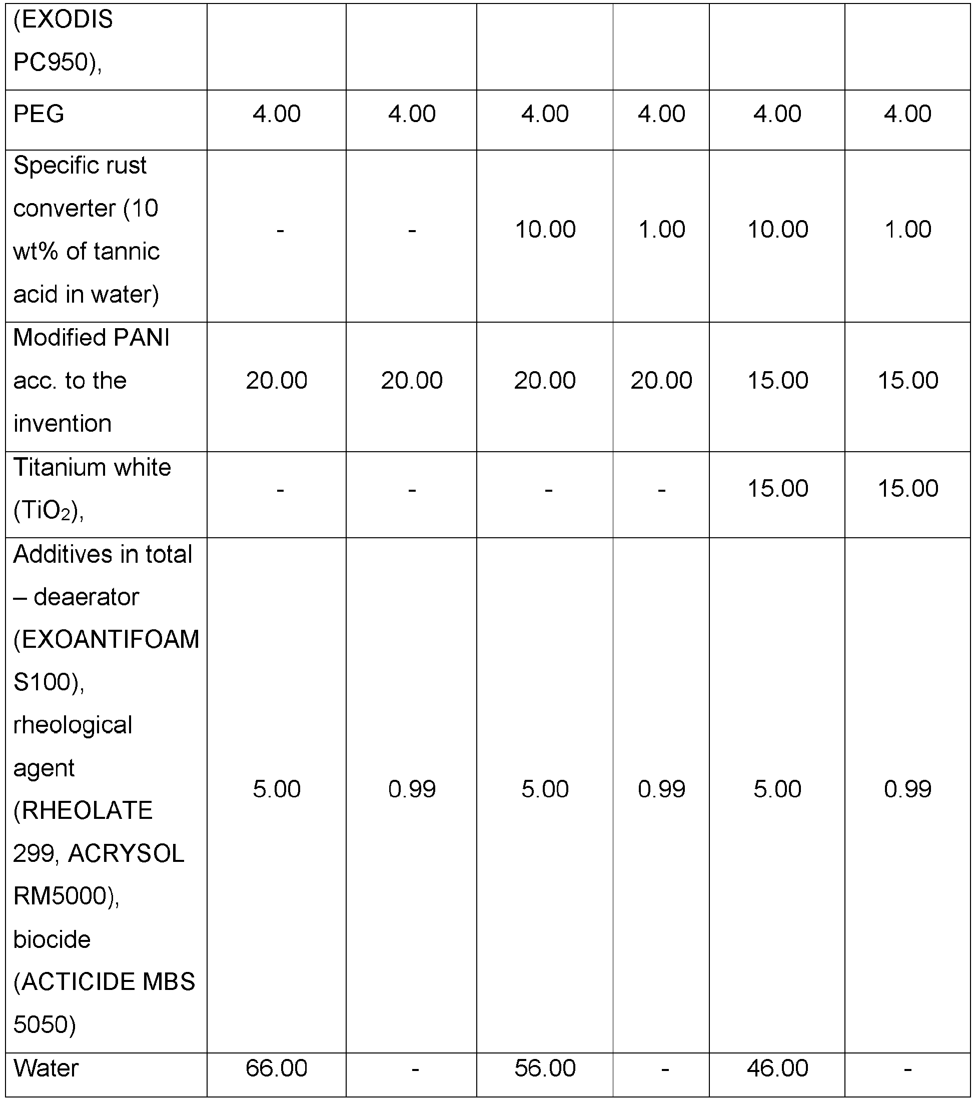

The concentrate is water dilutable, and it is especially suitable for preparing water-based coating systems, such as water paints, water-based primers, or water-based DTM (Direct-To-Metal) compositions, wherein the concentrate can be comprised in the water-based coating system in concentration of 0.5 to 3 wt%. Preferably, the concentrate can be introduced into the mixture of other substrates for the coating system at the step of final completion, and more preferably after the step of pigment grinding. This way one can obtain a water-based coating system comprising the modified PANI that is evenly dispersed in the whole volume of the coating system, and it features improved stability.

Moreover, the coatings obtained from coating systems comprising said concentrate shows enhanced adhesion to the substrates, improved hydrophobicity, and flexibility.

### Semifinished product comprising the modified PANI in a form of solvent-dilutable paste

The paste comprises 10 to 20 wt% of the modified PANI according to the present invention; 2.6 to 3,1 wt% of anionic dispersants, e.g. at least one anionic dispersant such as hydroxy-phosphate ester characterized by acid value from 180 to 200 mgKOH/g; 20 to 30 wt% of aldehyde resin; 0.6 to 1.7 wt% of additive(s) including at least one additive selected from the group consisting of deaerators, thickeners, rheological agents; and optionally up to 15 wt % of titanium white (TiO₂); and/or optionally up to 20 wt% of a specific rust converter being a 10 wt% solution of rust converting substance, preferably tannic acid dissolved in methoxypropyl acetate; and methoxypropyl acetate (as solvent) in amount to complete 100 wt% of the paste. Table 4 presents three various compositions (P1 - P3) of the solvent-based paste comprising the modified PANI, according to the present invention.

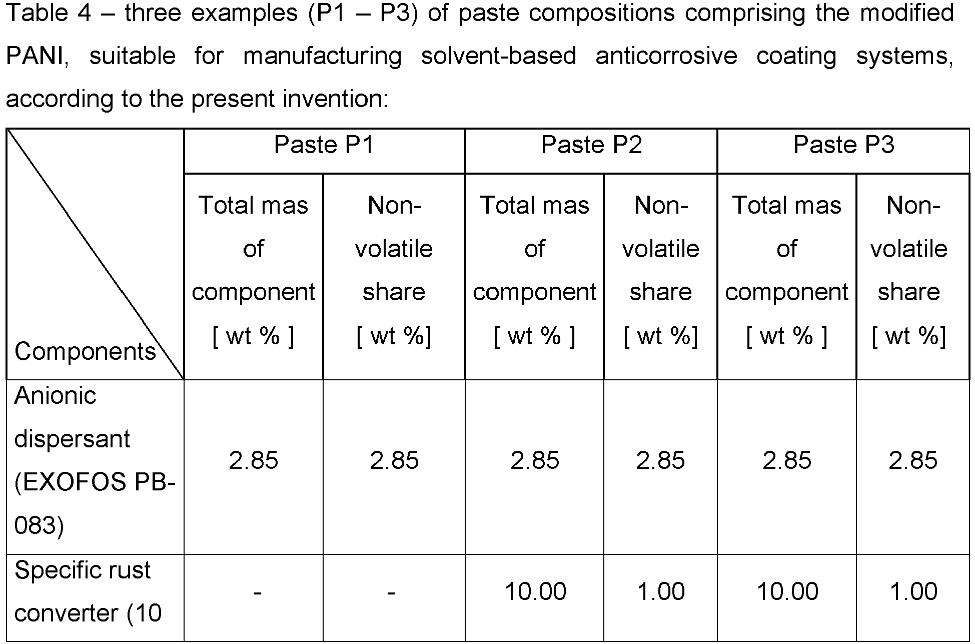

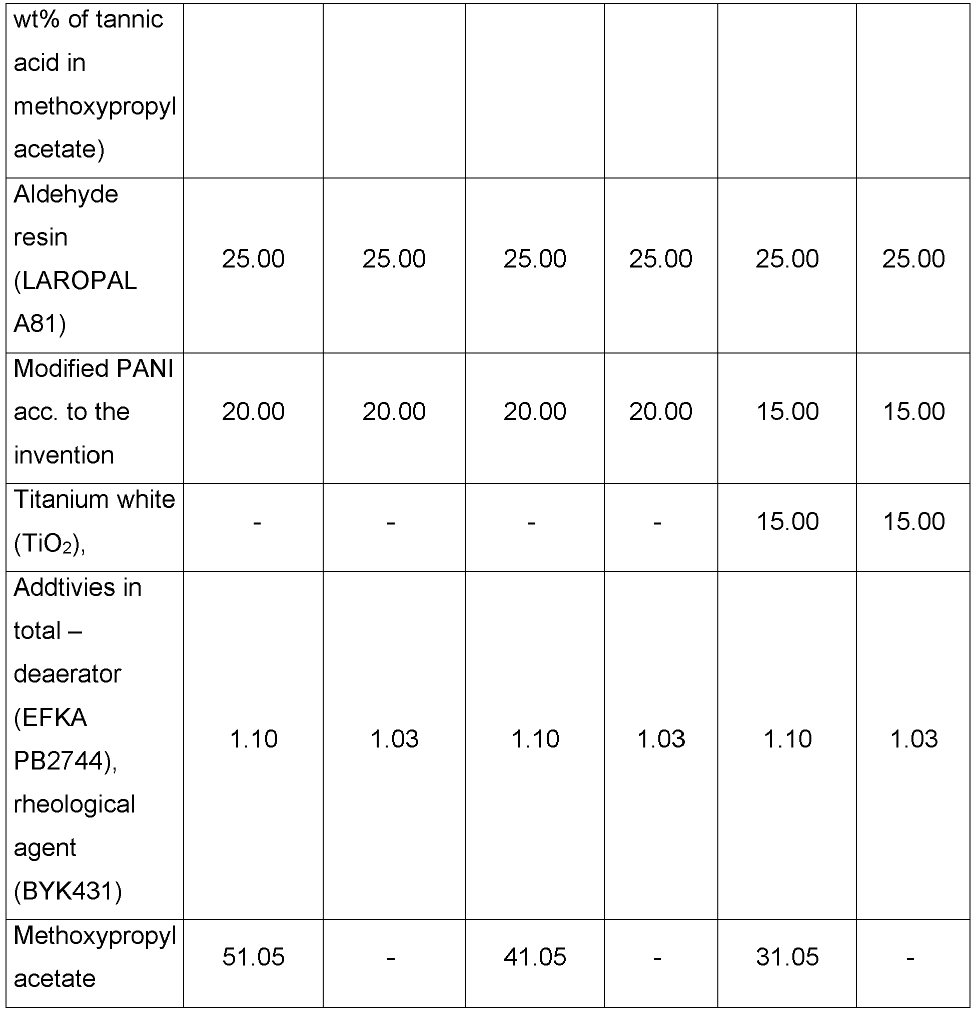

The paste is solvent-dilutable, and it is especially suitable for preparing organic solvent-based coating systems, such as solvent-based primers, or solvent-based primer-enamel compositions, solvent-based paints, wherein the paste can be comprised in the organic solvent-based coating system in concentration of 0.5 to 3 wt%.

Preferably, the paste can be introduced into the mixture of other substrates for the coating system at the step of final completion. This way one can obtain an organic solvent-based coating system comprising the modified PANI that is evenly dispersed in the whole volume of the coating system, and it features improved stability. Moreover, the coatings obtained from coating systems comprising said paste shows enhanced adhesion to the substrates, improved hydrophobicity, and flexibility.

The coating systems obtained with the use of the above-described paste or concentrate, show improved adhesion to various substrates, wherein the cured coatings obtained therefrom feature enhanced hydrophobicity and flexibility which provides their minimized cracking tendency. Moreover, the coatings, especially fastdrying alkyd primers that are based on said paste, exhibit minimized tendency to skinning. The latter allows for reducing the concentration of harmful anti-skinning components (typically used in these systems) - such as ketoximes. Furthermore, the anionic dispersants comprised in the pastes allow for forming more stable paste compositions. Further, the anionic dispersant shows synergistic effect with the modified PANI powder. The performed stability tests (4T/50C) showed very good compatibility (after 4 weeks at 50°C no tendency to viscosity increase, no sediments and no separation of ingredients were observed).

### EXEMPLARY EMBODIMENT - synthesis of modified PANI (according to the example 2 (E2) of Table 1. above):

### Preparing aqueous aniline salt solution:

2.1 g of aniline, 3.89 g of citric acid, 0.85 g of oxalic acid, and 0.25 g of antifoaming agent (EXOANTIFOAM S100 from PCC Exol SA (Brzeg Dolny, Poland)) were introduced into 75 ml of distilled water, and mixed for 15 min at 200 rpm (revolution per minute).

### Preparing aqueous oxidant solution:

3.2 g of KmnO₄ was introduced into 145 ml of distilled water and mixed for 20 min at 200 rpm.

Next, the aqueous oxidant solution was added dropwise to the aqueous aniline salt solution, and the temperature of the formed mixture was maintained at the level of 5 - 15°C. Simultaneously, a total of 0.25 g of the antifoaming agent (EXOANTIFOAM S100 from PCC Exol SA (Brzeg Dolny, Poland)) was added to the mixture, in two equal batches. The particles of dark precipitate were appearing during the mixing. The total mixing time was 6 hours, at 300 rpm.

Next, vacuum filtration of the obtained precipitate was performed using soft filter followed by washing the precipitate with demineralized water (three portions of demineralized washing water were used, 245 ml each). This led to filtrate pH between 4,5 and 5,5.

Next, the obtained precipitate was air dried at 85°C +/- 5°C for 9 hours. This way dark precipitate was obtained comprising the salt of PANI with the addition of manganese (II) salt (manganese (II) salt being the byproduct of oxidation reaction - thereby it constitutes a kind of PANI contamination, however, said contamination contributes to improved properties of the modified PANI - as explained above).

The following properties of the obtained modified PANI were assessed: OAN using ASTM D281-12/2016 standard, as well as bulk density and moisture content, while the quantitative composition was assessed by using the method of thermogravimetric analysis.

The obtained results were as follows: OAN: oil number 77 ± 1 g / 100g; bulk density: 0.287 ± 0.020 g/ccm; quantitative composition of the product: 76 ± 0.5 wt% of the polyaniline salt being the salt of polyaniline and saturated polycarboxylic acids: citric acid and oxalic acid; 22 ± 0.5 wt% of manganese (II) compounds (being byproduct of the oxidation with KmnO₄), and 2 ± 0.5 wt% of moisture.

## Claims

1. A method for synthesizing an anticorrosive additive, comprising the steps of
- providing an aqueous aniline salt solution that comprises at least one anilinium carboxylate synthesized from an aniline and at least one saturated polycarboxylic acid selected from at least one dicarboxylic acid and/or at least one tricarboxylic acid,
- providing an aqueous oxidant solution comprising from 2 to 5 wt% of an oxidizing agent comprising a manganese oxidant,
- contacting the aqueous aniline salt solution with the aqueous oxidant solution to form a reaction mixture wherein the at least one anilinium carboxylate is subject to an oxidative polymerization,
wherein the molar ratio of the oxidizing agent to the aniline of the solutions being contacted is of 0.5 to 2.0,
wherein the method comprises providing an anti-foaming agent in at least one of the aqueous aniline salt solution, the aqueous oxidant solution, or the reaction mixture, and wherein the total concentration of the anti-foaming agent in the reaction mixture is between 0.2 and 0.8 wt%,
and wherein the method further comprises the step of
- isolating an obtained product of the oxidative polymerization being the anticorrosive additive in a form of a modified polyaniline (PANI).

2. The method according to claim 1 wherein the manganese oxidant is KMnO₄.

3. The method according to any of the preceding claims wherein the oxidizing agent further comprises a non-manganese oxidant is (NH₄)₂S₂O₈, wherein the weight ratio of the manganese oxidant to the non-manganese oxidant is of 1:0.01 to 1 : 1.

4. The method according to any of the preceding claims wherein the aqueous aniline salt solution comprises the at least one anilinium carboxylate being the salt of aniline and at least one saturated polycarboxylic acids selected from
at least one dicarboxylic acid selected from the group consisting of oxalic acid, malonic, acid, succinic acid, phthalic acid, glutaric acid, adipic acid, and pimelic acid,
and/or
at least one tricarboxylic acid selected from the group consisting of citric acid, iso-citric acid, and tricarballylic acid.

5. The method according to claim 4 wherein the aqueous aniline salt solution has an acidic pH not exceeding pH of 2.5, wherein said acidic pH is assured by carboxylic moieties of the at least one polycarboxylic acids being in molar excess with respect to the aniline, in the aqueous aniline solution.

6. The method according to any of the preceding claims, comprising preparing the aqueous aniline salt solution by preparing 0.6 to 2.2 M aqueous solution of the at least one polycarboxylic acid, and adding aniline to said solution in a molar deficiency with respect to the at least one polycarboxylic acid to assure an acidic pH of obtained the aqueous solution of at least one anilinium carboxylate, not exceeding pH of 2.5.

7. The method according to any of the preceding claims wherein the anti-foaming agent is an 15wt% emulsion of silicon compounds in water.

8. The method according to any of the preceding claims wherein the oxidative polymerization is initiated by adding dropwise the aqueous oxidant solution to the aqueous aniline salt solution, wherein the oxidative polymerization is carried out under constant cooling in an ice bath, for 4 to 8 hours.

9. An anticorrosive additive being a modified polyaniline (PANI) having Oil Absorption Number (OAN) between 60 and 90, the modified PANI comprising from 55 to 80 wt% of at least one polianiline salt being the salt of polyaniline and at least one saturated polycarboxylic acid selected from at least one dicarboxylic acid and/or at least one tricarboxylic acid, from 12 to 37 wt% of manganese (II) compounds, and from 1 to 8 wt% of moisture.

10. A semifinished product being a composition for manufacturing a film-forming anticorrosive composition, the semifinished product comprising 10 to 20 wt% of the modified PANI according to claim 9.

11. The product according to claim 10 in a form of a water dilutable concentrate, wherein the product further comprises
4 to 6 wt% of non-ionic dispersants,
3 to 5 wt% of polyethylene glycol (PEG),
4 to 5 wt% of additives selected from deaerators, thickeners, rheological agents, and biocides,
optionally up to 50 wt% of titanium white (TiO₂), and/or
optionally up to 20 wt% of a specific rust converter being a 10 wt% solution of rust converting substance,
and water in amount to complete 100 wt% of the concentrate.

12. The product according to claim 10 in a form of an organic solvent dilutable paste, wherein the product further comprises
2.6 to 3.1 wt% of anionic dispersants,
20 to 30 wt% of aldehyde resin,
0.6 to 1.7 wt% of additives selected from deaerators, thickeners, and rheological agents,
optionally up to 15wt% of titanium white (TiO₂), and/or
optionally up to 20wt% of a specific rust converter being a 10 wt% solution of rust converting substance,
and methoxypropyl acetate in amount to complete 100 wt% of the paste.

13. A film-forming anticorrosive composition comprising from 0.1 to 0.6 wt% of the modified PANI according to claim 10.

14. The composition according to claim 13 wherein the composition comprises from 0.5 to 3 wt% of the concentrate according to claim 11.

15. The composition according to claim 13 wherein the composition comprises from 0.5 to 3 wt% of the paste according to claim 12.
